# EUROPEAN PATENT SPECIFICATION

(11) **EP 0 868 653 B1**
(45) Date of publication and mention of the grant of the patent: **06.08.2003**
(21) Application number: 96944923.0
(22) Date of filing: 20.12.1996
(51) Int. Cl.: G01F 1/36, G01F 15/18, F16L 41/00, G01L 19/00

(54) **METHOD OF INSTALLING DIFFERENTIAL PRESSURE TRANSDUCER**
VERFAHREN ZUR INSTALLIERUNG EINES DRUCKDIFFERENZUMSETZERS
METHODE POUR INSTALLATION D'UN APPAREIL POUR MESURER LA PRESSION DIFFERENTIELLE

(30) Priority: 20.12.1995 US 8968 P; 09.05.1996 US 644074
(43) Date of publication of application: 07.10.1998
(73) Proprietor: THE DOW CHEMICAL COMPANY, Midland, Michigan 48674 (US)
(72) Inventor: HOPPER, Henry, E., Baton Rouge, LA 70709 (US)
(74) Representative: Prechtel, Jörg, Dipl.-Phys. Dr.
(86) International application number: US9620387
(87) International publication number: WO97022855

(56) References cited:
- US-A- 4 453 417
- US-A- 4 745 810
- US-A- 4 865 360
- US-A- 4 920 626
- US-A- 4 993 754
- US-A- 5 209 258

## Description

### FIELD OF THE INVENTION

This invention relates to improved installation methods for connecting pressure responsive instruments to process piping and vessels to measure pressure and differential pressure parameters (e.g., fluid flow, pressure, and level) without using problematic threaded connections such as threaded pipe nipples or tubing connections. The invention in a specific aspect relates to an improved close coupled, direct mount method for installing a differential pressure transducer across the high and low process pressure taps of a process pipe using rigid impulse lines to directly support the transducer horizontally off the process pipe without the need for a separate support system for the transducer. Furthermore improved process instrument installation kits, installation components, e.g., improved root valves and adapters, and improved installation systems which provide the above features and advantageous while also providing significant overall cost saving benefits are disclosed.

### BACKGROUND OF THE INVENTION

A standard technique used in industrial chemical and petrochemical facilities for measuring gas and liquid flow in process piping is based on the use of a device which is placed inside the piping to generate a pressure differential in the fluid flowing in the pipe. The most common device for this purpose is an orifice plate although other devices can be used such as wedge meters and venturi meters. The preferred orifice plate device comprises a flat disc which has a precise hole usually in its center which generates a pressure differential according to the flow of fluid past the plate. Piping flanges or orifice flanges on each side of the orifice plate are provided with pressure taps (usually ½ inch = 12,7 mm drilled holes) located apart from each other 1 inch (= 25,4 mm) upstream and 1 inch (= 25,4 mm) downstream from the orifice plate. Assuming that the orifice plate (and its gasket material) are nominally about 1/8^{th} inch (= 3,175 mm) thick, this provides an industry standard spacing of about 2-1/8 inch (= 53,975 mm) center line to center line between the pressure caps (although this can vary over an actual range of from about 1 ¾ inch to 2 ½ inch (44,45 mm to 63,5 mm) of spacing between the taps in typical installations).

The flow rate of the process fluid can be measured by placing a differential pressure transducer across the process pressure taps. The static pressure in the piping is canceled out by the transducer ideally leaving only the differential pressure generated by the flowing fluid to represent the flowing quantity. Since the differential pressure is the parameter from which the actual flow rate is determined, it is important that there be minimal influences that effect the differential pressure sensed by the transducer other than those proportional to the race of fluid flow. In prior art process instrumentation it has generally been a common practice to place the transducer in an accessible location remote from the process piping and process pressure taps. Easy accessibility facilitates a more frequent inspection and servicing schedule. The long impulse lines required for remote installations, nevertheless, can be the primary source for measurement errors. Liquid condensation or accumulation of entrained or trapped gas bubbles in the impulse lines can detrimentally influence the differential pressure sensed by the instrument. The differential pressure sensed by the instrument can also be detrimentally influenced by density variations in the process liquid caused particularly, for example, by temperature variations in non-horizontal sections of the impulse lines or legs. The prior art practice of installing the transducer at an accessible location remote from the process pressure taps can also add to the burden of locating the source of instrument problems.

A "root valve" in process instrumentation is the primary isolating valve and the first valve off the process line whose function is the secure isolation of the process from the instrument for purposes of repair, replacement, testing and calibration. Since the industry standard spacing for the process pressure taps is nominally 2-1/8 inch 53,975 mm, standard ANSI (American National Standards Institute) or DIN (Deutsches Institut für Normung) flanges are usually too large in diameter to be used to connect parallel root valves to the process pressure taps unless, for example, the flanges are staggered to avoid conflict with each other; or the pressure taps themselves are offset to avoid interference between the flanges. Staggering the flanges tends to produce very long moment arms that may prove difficult to employ in confined spaces, and offsetting (rotating) the process pressure caps can lead to the kind of measurement errors indicated above.

Rather than using ANSI/DIN flange connections. United States Patent Nos. 4,745,810, 4,865,360, 4 920 626, and 5,209,258 suggest the use of small bore instrument manifold valves for use as root valves in process instrumentation. These small bore (not full port) instrument valves do not allow "rodding" out of the instrument taps (in contrast to full port valves). Instrument manifold valves are usually needle valves which lack the seal integrity of ball valves, and as further drawbacks, do not typically provide safety lockout features, and are usually multi-turn valves that undesirably do not indicate visually whether the valve is open or closed. Also threaded pipe nipples or threaded tube connections or flanges are suggested for use to connect instrument manifold valves to the process pressure taps. Threaded connections are notorious for being a primary cause for process leaks. Stress risers introduced into the metal by cutting the threads are a primary cause for pipe fracture. Thus instrument installations using instrument manifold valves and/or threaded connections to attach the differential pressure transducer to the process taps are often not approved for use in specific plants or with respect to specific processes.

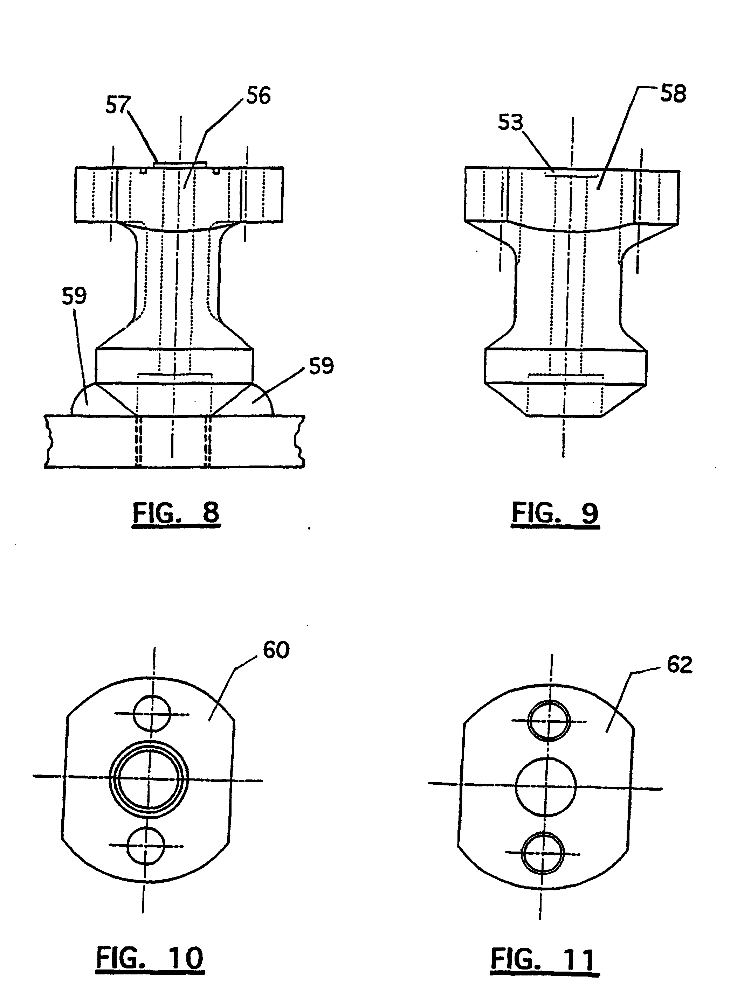

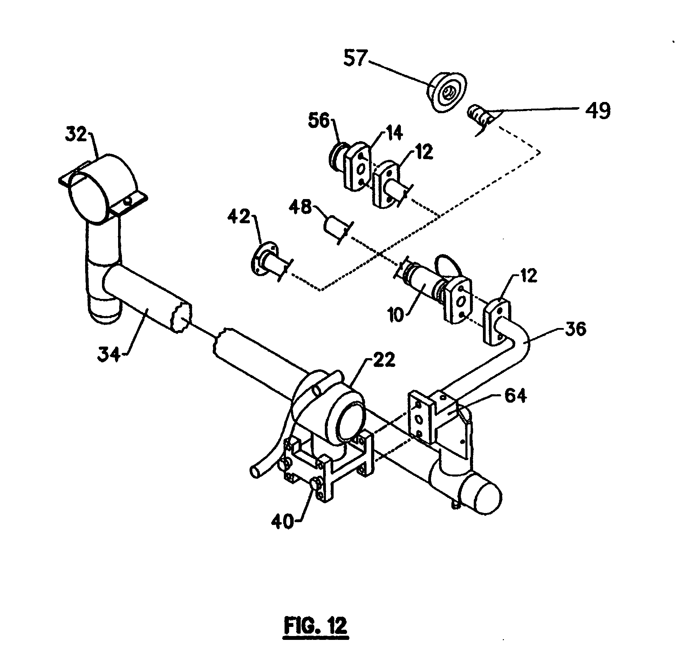

A "close coupled, direct mount" installation indicates that the instrument (transducer) is supported from the process connection, usually the orifice flanges, without the aid of a separate support system. In the instrument installation systems disclosed in US 4 865 360 and US 4 920 626 the spacing between the flange adapters can be adjusted to the spacing between the flange faces of the differential pressure sensor by elliptical when of the flange adapter faces. Another example of a prior art close coupled, direct mount system for installing a differential pressure transducer is illustrated in United States Patent No. 4,745, 810 (the teachings of which are hereby incorporated herein by reference). In this system the spacing between the process pressure taps is adjusted by rotating pipe nipples 154, 156 ( if they are eccentric)(see Figs. 11 and 12) and/or by rotating the flange adapters or "footballs" 150, 152 (which are eccentric). Invariably the centerline distance between the flange adapters 150, 152 does not come out to an exact 2-1/8 inch spacing which is necessary to precisely mate the flange adapters with the corresponding flange faces of the manifold valve 154 (see Figure 11) or transducer 10 (see Figure 12). To compensate for this misalignment, the usual procedure is to rotate one of the flange adapters 180 degrees to move the centerlines of the flange adapters closer or further apart as required to meet the standard 2-1/8 inch separation distance that will ensure a proper fit with the corresponding flange faces of the manifold valve 154 (or alternatively the differential pressure transducer 10). Due to a lack of precision of the threaded components, the displacement in/out distance of the flange faces of flange adapters 150, 152 is rarely the same, especially after the 180 degrees rotation of one of the flange adapters to attain something reasonably close to a 2-1/8 inch centerline to centerline spacing between the flange adapters 150,152. Accordingly, a stress free or low stress fit is rarely achieved. Also, the prior art of using threaded connections (lack of precision) almost always produces the condition where the flange faces of the footballs or flange adapters 150, 152 are not in the same plane. Generally, the prior art close coupled, direct mount systems require the use of stress to force the flange faces of flange adapters 150, 152 to be in the same plane by tightening bolts 164-170. Since this is a close coupled, direct mount system, there is little spring rate available, and the stress associated with forcing the flange faces of flange adapters 150, 152 into the same plane can create substantial stresses in pipe nipples 154, 156 and in the threaded ends of bolts 164-170. This can produce two very unwanted points of stress that can lead to premature component failure:
(a) over-scressed bolts - either the heads can pop off or the bolt threads can fail; or
(b) the stress can cause the pipe to fail due to the stress risers that are created by cutting the threads into the pipe nipples.

Nevertheless, the prior art close coupled, direct mount system of the general nature described continues to be used frequently due to the lack of an acceptable alternative, but often leads to maintenance problems due particularly to the corrosive nature of many chemicals.

### THE OBJECTS AND PURPOSES OF THE INVENTION

Accordingly, it is an object and purpose of this invention to provide improved installation methods for connecting pressure responsive instruments to process piping and vessels to measure pressure and differential pressure parameters (e.g., fluid flow, pressure and level).

Furthermore an improved close coupled, direct mount system for installing a differential pressure transducer across the high and low process pressure taps of standard (and nonstandard) configuration differential pressure generating devices for process piping such as orifice plates, wedge meters, venturi meters, etc., without using threaded connections such as threaded pipe nipples or threaded tubing connectors can be provided.

Furthermore a close coupled, direct mount system for installing a differential pressure transducer across the high and low process pressure taps of standard (and nonstandard) configuration differential pressure generating devices installed in process piping can be obtained which forces the center lines of the high and low pressure ports of the differential pressure transducer into an essentially horizontal planar relationship with the centerlines of the bores of the impulse lines and the centerlines of the process pressure taps to minimize or eliminate the effects of condensed liquid or trapped bubbles or density variations in the fluid in the impulse lines from affecting the accuracy of the measurement.

Improved root valves for use in connecting pressure responsive instruments to process piping and process vessels can be provided.

Eccentric adapters for use in close coupled, direct mount (rigid pipe) installations of differential pressure transducers across the process pressure taps of process piping which can be used to easily attain perfect or nearly perfect flange face alignments between mating male and female instrument flanges used in the installation can be provided.

A system for installing a differential pressure transducer across the process pressure taps of process piping can be provided which is based on using pre-aligned assemblies of flange adapters or pre-aligned assemblies of flanged root valves which allows a rigid pipe corinection of the flange adapters or root valves to the process pressure taps while maintaining essentially planar alignment of critical flange faces and precise lateral spacing between the centerlines of flange adapters or root valves, as applies.

Improved installations of pressure responsive instruments in connection with process piping and process vessels together with prepackaged instrument installation kits for use is correcting pressure responsive instruments to process piping and process vessels having the attributes specified above can be provided.

An improved, very close coupled, direct mount system for connecting a differential pressure transducer to the high and low process pressure taps of process piping can be provided wherein very close coupling is achieved in a "rigid pipe" direct mount installation without the use of threaded connections.

### GENERAL DESCRIPTION AND SUMMARY OF THE INVENTION

The invention solves the above mentioned object according to a method of installing a differential pressure transducer as claimed in claims 1 and 6. Preferred embodiments of the method of the present invention are given following description.

The invention generally relates to improved installation methods for connecting pressure responsive instruments to process piping and vessels to measure pressure and differential pressure parameters (e.g., fluid flow, pressure, and level). The invention relates more specifically to installing a differential pressure transducer across the process pressure taps of process piping wherein, inside the piping between the process pressure taps, there is placed a restriction to fluid flow which creates a differential pressure through which the flow rate of the fluid in the pipe can be ascertained. The most common device for accomplishing this function is an orifice plate. However, a wedge meter or venturi meter or other device which generates a differential pressure in the flowing fluid proportional to the flow rate can be substituted for the preferred orifice plate.

A specific aspect of the invention relates to the use of eccentric adapters. These adapters are used to correct for discrepancies in the centerline to centerline spacing between the process pressure taps of the process piping. With an orifice plate device, the process pressure taps should be in the horizontal plane spaced 3-1/8 inch (=53.975 mm) apart. When the pressure taps deviate form this spacing and orientation, serious alignment problems are caused with respect to alignment with the standard flange faces of the high and low pressure ports of commercial differential pressure transducers. The standard flange or flange face configurations are predetermined by the manufacturers of the transducers. (A standard configuration adhered to by manufacturers presently is the referenced spacing of 2-1/8 inch (= 53,975 mm) between the high and low pressure port flange faces (which nominally corresponds to the industry standard 2-1/8 inch (=53,975mm) spacing between the process pressure taps.)) The eccentric adapters are designed with a first (by convention preferably male) end which is designed to preferably protrude into the process pressure cap and be welded to the orifice plate (or other process connection) to form a leak tight joint. The other end or second end of the eccentric adapter can be a female or a male end (preferably a socket or female end) which is adapted to fit with and be welded together with either a flange adapter or a root valve (as will be explained in more detail hereinafter). The eccentric adapter is preferably welded directly to the process connection, e.g., orifice flange. Its opposite end is preferably welded directly to the flange adapter or root valve. However, indirect welding such as through weld-o-lets, sock-o-lets, etc. (as well known in the welding art) can be used with satisfactory results for either the process connection or connection to the flange adapter or root valve. (The type of ends (male or female) of the eccentric adapter is not a critical aspect and is generally determined by convention). What is considered critical to the close coupled, direct mount installations is that the eccentric adapter can be welded to form rigid impulse lines that will horizontally support the differential transducer of the process piping connection (e.g., orifice flange) without the need for a separate support system. A second critical aspect of the eccentric adapter is that the axis of rotation of its first end (process connection side) is not coaxial with the axis of rotation of its second end which connects directly or indirectly to the flange adapter or alternatively to the root valve. The eccentric adapters thus provide a connection off-set. By installing and rotating these adapters. +/- 3/8 inch (= +/- 9,525 mm) corrections can be made to bring the process pressure tap centerlines back to the industry standard 2-1/8 inch (=53,975mm) spacing. While even a greater range of correction can be designed into the eccentric adapters, +/- 3/8 inch (=-/-9,525mm) has been found sufficient to cover nearly the entire range of correction required with regard to the common orifice plate devices.

Another specific aspect of the invention relates to improved root valves designed to have an integral (2 bolt) standard instrument flange on the instrument side of the valve (the side that is connected directly or indirectly to the differential pressure transducer), and an integral, weldable end, or alternatively, an integral flange on its opposite end (i.e., on the process side of the root valve which connects directly or indirectly to the process connection, e.g., orifice flange). The flange end(s) are preferably integrally fabricated with the root valve body (manufactured such as by investment casting the valve body with integral flange end(s)); or the flange(s) can be independently fabricated and attached to a pre-made valve body by welding or other suitable means well known to the valve manufacturing and fabricating arts. These root valves, when designed with a weldable end on the process side, are provided in pairs fastened together in a specific fixed relationship or pre-alignment. In this pre-assembly the weldable (process side) ends of the valves are pre-aligned on a fixed 2-1/8 inch (= 53,975 mm) centerline to centerline spacing, and the flange faces on the instrument flange ends of the valves are also pre-aligned on 2-1/8 inch (= 53,925 mm) centerline to centerline spacing. The flange faces and bolt holes in the instrument flanges are orientated in the pre-assembly to mate with the industry standard instrument flange faces of the high and low pressure ports of the differential pressure transducer; or alternatively, for example, with a bypass manifold having standard instrument flange faces (the bypass manifold being disposed between the root valves and transducer in some installations to facilitate zeroing the transducer under actual line pressure rather than atmospheric pressure). In this specific pre-assembly of a pair of pre-aligned root valves, the centerlines of the flange faces of the instrument flanges of the root valves lie commonly on the horizontal plane when the opposite, weldable (or process side) ends of the adapters are fitted and joined to the process connection directly, or indirectly through the eccentric adapters. When the installation is complete, this pre-orientation of the root valves with the aid of the eccentric adapters, forces the centerlines of the flange faces of the high and low pressure ports of the installed differential pressure transducer into an essentially horizontal, coplanar relationship with the centerlines of the horizontally installed "rigid pipe" impulse lines (i.e., root valves and flange connections) and the centerlines of the process taps to minimize or eliminate the effects of condensed liquid or trapped bubbles or density variations in the fluid in the impulse lines from effecting the accuracy of the measurement. This relationship is forced by the design of the installation and not by the stressing of the impulse lines or flange connections, thus avoiding the high maintenance problems associated with prior art close coupled, direct mount installations. In the installation according to the principles of the invention, the root valves rigidly indirectly connect to the process connection through rigid, welded-in place eccentric adapters. These installations thus provide a substantially improved close coupled, direct mount system for installing differential pressure transducers across the process pressure taps of the process piping, but without the serious alignment problems of prior art close coupled, direct mount (rigid pipe) instrument installations, and without the use of problematic threaded connections.

Another specific aspect of the invention relates to a specific design(s) of flange adapters which are used to join root valves of the type designed with integral flanges on both ends of the valve. These flange adapters are installed between the process pressure taps and the root valves and are provided with a weldable end adapted to be joined directly to the process connection; or indirectly to the process connection through the eccentric adapters. The opposite ends of these flange adapters are designed with flanges having flange faces which mate with the flange faces of the integral flanges designed for the process side of the root valves. These flange adapters are also provided in pairs fastened together in a specific pre-alignment with the weldable (process side) ends of the adapters being pre-aligned on a fixed 2-1/8 inch (= 53,975 mm) centerline to centerline spacing, and the flange faces on the flange ends of the adapters also being pre-aligned on a fixed 2-1/8 inch (=53,975 mm) centerline to centerline spacing. In this specific pre-assembly of a pair of pre-aligned flange adapters, the centerlines of the flange faces lie commonly on the horizontal plane when the opposite, weldable (or process side) ends of the adapters are fitted and joined to the process connection directly, or indirectly through the eccentric adapters. When the installation is complete, this pre-orientation of the flange adapters with the aid of the eccentric adapters, forces the centerlines of the flange faces of the high and low pressure ports of the differential pressure transducer into an essentially horizontal, coplanar relationship with the centerlines of the horizontally installed "rigid pipe" impulse lines (i.e., root valves and flange connections) and the centerlines of the process taps to minimise or eliminate the effects of condensed liquid or trapped bubbles or density variations in the fluid in the impulse lines from affecting the accuracy of the measurement. Again this relationship is forced by the design of the installation and not by the stressing of the impulse lines or flange connections, thus avoiding the high maintenance problems associated with prior art close coupled, direct mount installations. In addition, since the impulse lines (eccentric adapters flange adapter, and root valves) are of rigid construction, this construction similarly to that described previously provides a substantially improved close coupled, direct mount of the differential pressure transducer to the process connections without the serious alignment problems of typical prior art close coupled, direct mount (rigid pipe) installations. The optimum form of the flange adapter/flanged root valve combination employs a standard instrument (by convention female) flange face on the flange adapters which mate with (by convention male) standard instrument flange faces of the flanged root valves (in these most preferred embodiments, both the ends of the root valves are made with standard instrument flanges). The standard 2 bolt, oval instrument flange design can be used without creating an interference between the flange edges as in large diameter ANSI and DIN type flanges. In addition, tests have shown that the 1 bolt standard instrument flange with a commercial instrument flange gasket can provide a pressure rating range which is superior to the pressure rating range of comparable 4 bolt ANSI or DIN type flanges which are typically limited to quite narrow pressure range ratings. Thus the broader pressure range rating can greatly reduce the complexity of the installation hardware by reducing the flange selection to basically a single flange design (although the gasket material and gasket type, such a o-ring or ring type gasket design, and the material of construction and specifications of the root valves and other installation components can be selected and determined as appropriate to the application and the specific engineering specifications and requirements of the plane/process owner).

Another specific aspect of the invention relates the alignment means used in the pre-assembly of the pair of pre-aligned root valve as well as the pair of pre-aligned flange adapters preferably used in the instrument installations according to the invention. Most preferred is simply an alignment plate to which the root valve pair or flange adapter pair are bolted. Since the flange ends are female ends (by convention and critical to the purposes of the invention) the flange adapters can be bolted to the alignment place using the same bolts as ultimately are used to fasten the flange adapters to the corresponding process side of the corresponding male flange faces of the root valves. In the case of the root valves, these are by convention normally male flange faces on both ends of the valve. Thus the bolt holes would not normally be threaded. For the root valves, the alignment plate could be fabricated with drilled and threaded bolt holes for attaching and mounting the root valves in the pre-assembly. If the root valves and flange adapters are standard instrument flanges, the bolts used could be the standard size specified for the standard instrument flange. This is usually specified to be 7/16-20 UNF boles, 2 each per flange. Obviously, however, these details are not critical to the invention in its broadest aspects. Other alignment means which would mount the flange pairs and the root valve pairs with the prerequisite alignment required for the purposes of the invention could obviously be substituted for the alignment place with satisfactory results. However, it is preferred that the alignment means be detachable so that it can be removed following is usefulness in the installation. One reason for this is that it adds unnecessary weight. In the case of the flange adapters, since these are welded in place, using a permanent or non-detachable alignment means could interfere with disassembly of the orifice plate and this would be a less desirable installation from a serviceability standpoint. Since the root valves can be decoupled, however, in some embodiments from the process connection, this same disadvantage does not apply to the root valve pairs which employ flange connections on both the process side and the instrument side. The means joining the root valves as a pre-assembled unit could comprise a permanent (integral or permanent but detachable) alignment means that remains with the installation although this is not a preferred form of the invention. In the case where the orifice plate were to be temporarily removed from service and reinstalled, it is improbable that exactly the same bolt tension would be used in bolting the orifice flanges back together. Alternatively a gasket change might be made that would use a slightly thinner or thicker gasket. Whatever the cause, a slight increase or decrease in spacing between the process pressure taps could result. This can be compensated for by providing slightly enlarged or oval bolt holes in the flanges that would allow small changes in the process pressure tap spacing to be compensated for while maintain a low stress force on the impulse lines and flange couplings.

Furthermore it is possible to provide pre-packaged kits of installation hardware for connecting pressure responsive instruments to process piping and process vessels. Ones of the attributes of the methods for installing differential pressure transducers according to the invention is the versatility of the design. It can be used in direct mount as well as in supported installations. The kit design and instructions force or strongly direct the installer to install the impulse lines and transducer in a horizontal orientation in the same or essentially the same plane as the process pressure taps (and keeping both impulse legs horizontal and preferably parallel). By forcing a horizontal orientation, these kits can provide a versatile solution to installing differential pressure transducers in difficult environments involving fluids that condense or accumulate in the impulse lines, or have a propensity for trapping bubbles or where fluid density variations might be encountered (as well as in applications which do not present these particular problems). The use of these pre-designed installations or kits tends to better ensure that the quality or reliability of the measurement is improved by reducing the potential for unwanted hydrostatic head effects as with offset impulse lines using, e.g., a remote installation or ANSI/DIN flanges. Because ½ inch (= 12,7 mm) pipe valves or their equivalent are strongly preferred for the kits, these kits allow "rodding" out of the instrument taps and they can also be used where the compliance with engineering specifications for the specific plant or process require a pipe valve (as well as in situations which allow, for example, the lighter-duty instrument manifold valves). The kits can be assembled with instructions and a selection of components that provide any level of functionality beginning with the basic combination of preferably a pre-assembly of the pre-aligned flange adapters with a pair of the double flanged root valves, or alternatively preferably a pre-assembly of the pre-aligned root valves having weldable ends on the process side and flange ends of preferably standard instrument type flange faces on the instrument side. The kit also could comprise a pair of pre-aligned root valves pre-assembled with the flange adapters connected to one end, and with the other end of the pair presenting pre-aligned industry standard instrument flanges. Eccentric adapters could be supplied as a part of the kit or could be supplied as a separate item and kept on hand by the installer for use when needed. This basic kit allows a pressure transducer to be installed directly onto the instrument flange faces of the flanged root valves in a desirable close coupled, direct mount design. If it is desired to be able to zero the differential pressure transducer under line pressure (as opposed to atmospheric pressure), a bypass manifold can be added to the kit. If flush and drain capability is desired a block valve can be added to a specific kit category or kit combination. (The preferred block valve contemplated specifically is mounted to the back side of the transducer in either a close couple, direct mount installation or a supported installation, and provides advantageous over tubing valves, tubing fittings, etc. used for this purpose in typical prior art installations.) If the engineering specifications of the plant/process specify that only supported installations can be used, specific kit categories can include extra impulse lines attachable to the above referenced basic combination of hardware together with a support system that adapts the kit to be used in these applications. These kits provide very substantial cost saving benefits, particularly by reducing the time spent in the following areas: installation design; procurement of installment hardware; installation labor; and maintenance labor. Moreover, this is accomplished by using welded components or bolted, gasketed flange joints for all impulse piping, if desired, and an absolute minimum, prererably zero threaded impulse line connections are utilized in the instrument installation. Further, the application of these measurement principles, valves, flanges, and prefabricated and pre-assembled installation kits can be extended to provide the similar benefits to pressure measurements on process pipes and vessels. These assemblies in a prefabricated kit form are ready for installation at a construction site, thereby reducing the cost of installing the instruments, better ensuring that inaccurate installation configurations are not deployed by the site construction contractor, and reducing maintenance due to installation errors such as caused by remote installation practices or over-stressed impulse lines and connections which are common to the prior art close coupled, direct mount installations. In addition to reducing the frequency of maintenance when compared with prior art close couple, direct mount installations or remote installations, when maintenance is required it is simplified by the improved installation designs provided by the invention which allows for easy disconnect and re-assembly of the installation at the flange joints for repair, replacement, rodding out the impulse lines, etc.

To summarize, the invention in its most preferred form provides instrument installation methods that allows 2 (parallel) flange joints to be used in the same plane and sice by side in rigid pipe, direct mount systems. These flanges have preferably instrument-industry standard bolt size, spacing and gasket faces. They permit the use of flanged valves and rigid pipe installation with industry standard side-by-side orientation of impulse taps on orifice flanges with the taps positioned parallel and on 2-1/8 inch centers. Instrument flanges may be used for coupling pipe to pipe or other components having industry standard flange components to develop kits having diverse/versatile application. The invention is advantageously employed to pre-design and pre-assemble modular instrument installation kits of standardized (interchangeable) components that:
A. minimize potential error in the measurement that normally occurs in impulse lines by removing the ability for the site contractor or installer to easily install the transducer in such a manner as to enable error in the measurement;
B. reduce maintenance costs;
C. improve transducer reliability by providing an installation system that forces the horizontal, coplanar, upright installation of the impulse lines and transducer and prevent partially covered sensing diaphragms that increase error and potential for corrosion.
D. reduce installation costs by:
   1. reducing the costs of components by using different arrangements of standard components;
   2. prefabricating all details;
   3. providing a method for proper installation alignment of welded components into the piping system; and,
   4. providing all components needed (impulse piping, adapters, winterization kit, etc., for a given installation, thereby eliminating:
      i. multiple purchase orders for a great variety of components; and,
      ii. receiving, storing, controlling, issuing said components; and,
      iii. field assembly of said components.
E. Additional Benefits:
   1. Providing enhanced system integrity by using welded or gasketed joints (the elimination of threads), thereby reducing potential leak points and pipe failure points (both from threads) and by using pipe instead of tubing for increased rigidity and robustness.
   2. Applying the above design solutions and methods to pressure measurement to obtain the same benefits.

### BRIEF DESCRIPTION OF THE DRAWINGS

Figure 1 is an exploded isometric view of a differential pressure transducer connected to a process pipe using a preferred to embodiment of a method for instrument installation according to the principles of the invention to achieve a closed coupled, direct mount of the transducer horizontally off of the process connection.
Figure 2 is a view like Figure 1 which shows a preferred embodiment of the method according to the invention to provide a closed couple, supported mount of the transducer.
Figure 3 is a view like Figure 2 which shows a modified form of a differential pressure transducer connected to a process pipe using the method according to the invention specifically designed to protect the transducer from damage due to contact with hot condensable process vapors.
Figure 4 is a view like Figure 2 which shows a modified form of a differential pressure transducer connected to a process pipe using the method according to the invention specifically designed to protect the transducer from damage due to contact with process cryogenic fluids.
Figure 5 is a view like Figure 2 which shows a modified form of a differential pressure transducer connected to a process pipe using the method according to the invention specifically designed to connect a differential pressure transducer to a process pipe containing steam.
Figures 6A-6G show various designs of different root valves each having an industry standard instrument flange on one end of the root valve and each having a different type end integral with the opposite end of each root valve, respectively.
Figure 7 is a isometric view of a winterizing system for use with the instrument installations systems provided by the method of the invention.
Figures 8 and 9 are side views of a male and female instrument flange, respectively, each with an integral weld-o-let integral therewith.
Figures 10 and 11 are frontal views of a male blind flange and a female blind flange, respectively.
Figure 12 is an exploded isometric view of a system for connecting a pressure transducer to a process pipe or vessel for level or pressure measurements.
Figures 13 and 14 are top views, respectively which show the process of installing the pre-aligned flange adapter pair and root valve pair, respectively, into the process pressure taps through the use of eccentric adapters.
Figure 15 is a top view illustrating the use of an elbow shaped flange adapter to allow a differential pressure transducer to be installed closely parallel to the process pipe using either a close coupled, direct mount or a close coupled, supported mount installation.
Figure 16 is a cross section view which shows a preferred form of the eccentric adapter.

### DEFINITIONS

"Standard Instrument Flange" refers to a flange which mates with the standard high pressure and/low pressure flange configurations of commercial differential pressure transducers. The current standard flange configuration provides 2-1/8 inch (= 53,975 mm) spacing, centerline to centerline between flat female flange faces (2 flanges side by side per transmitter for differential pressure measurement). This is such an accepted standard presently that nobody in the industry presently defines the connections other than as 2-1/8 inch (= 53,975 mm) instrument connections. The transducer standard instrument flange configuration has 4 threaded bolt holes (2 per flange) with each bolt pair spaced vertically apart 1.624 inches (41,25 mm) and horizontally apart 2-1/8 inch (= 53,975 mm). The bolt holes require 2ea./flange7/16-20 UNF bolts. The root valve pair having standard instrument flanges (on the instrument side) each requires a male flange with 1.624 inch (= 41,25 mm) spacing between the bolt holes (vertical direction). The male flange face preferably has defined in it a custom groove to receive preferably a ring type gasket or o-ring gasket. The size of the gasket groove and gasket, as well as the gasket type and the gasket material of construction are custom specifications and not part of the definition of the term "standard instrument flange". The preferred male flange faces each define a spigot which engages a counterbore (counterbore is approximately 0.73" (=18,542 mm) in diameter) in the female flange faces, respectively. The definition of the spigot on the male flange faces of the root valves is optional and not critical. The shape and size of the standard instrument flange was originally developed to provide "turn clearance" for the industry standard 3-1/8 inch (= 53,975 mm) process pressure tap centerline to centerline spacing. However, this is not critical to the present invention since "turn clearance" is not required of the instrument flanges of the root valve pair. Flange size, however, must permit side by side direct mount of the root valves to the process connection on 2-1/8 inch (= 53,975 mm) centerline to centerline spacing. It is conceivable in the future that commercial pressure differential transducers will be available with modified instrument flange faces. The term "standard instrument flange" as used herein is intended to cover flange faces which are fabricated to fit with the modified flange faces of future commercial differential pressure transducers.

"Root Valves" or "Root Valve Pairs" preferably refers to a pair of full bore ½ inch (= 12,7 mm) ball valves (3/8 inch (= 9,525 mm) inner diameter) in separate valve bodies of an external maximum diameter which allows the valves to be direct mounted side by side (horizontally, and on 2-1/8 inch (= 53,975 mm) centerline to centerline spacing) to the process connection directly or through eccentric adapters and/or flange adapters. Generally less preferred for use in the invention are gate valves and globe valves. Needle valves can be considered for limited applications. Valve sizes other than ½ inch (= 12,7 mm) valves can also be used successfully. The valves must meet appropriate local regulatory requirements in respect particularly to the pressure containing capabilities of the valve body, the temperature rating of the valve, and the valve body wall thickness. In the United States the valve needs to meet or exceed the standard piping valve requirements outlined in ASME/ANSI B 16.34 codes with respect to the process pressures and environment in which it is to be installed. (Comparable DIN 3840 codes specify valve body pressure containment specifications, for example which need to be met where these codes are applicable). Valve material of construction and gasket material of construction are selected based on the users knowledge of their process stream or application (fluid and process conditions). This selection is normally based upon reference to a set of plant rules (engineering specifications) specific to the fluid and process conditions and the user's historical experiences and knowledge respecting the fluid and process conditions.

"Process Connection" refers the process piping section(s) in which the process pressure taps are placed. With respect to the preferred orifice plate device the process connection thus would normally refer to the orifice flanges.

"Remote Mount" refers to mounting the device (differential pressure transducer and/or pressure transducer) at some distance from the process taps, requiring that impulse lines bring the process pressure(s) to the device. This is a very common technique that is employed for the following reasons: (a) to position the device for easy servicing (however, unwanted hydrostatic heads and hydrostatic head changes due to ambient temperature changes tend to force constant attention on the device); and (b) to correct for alignment problems arising from lack of tolerance control on orifice flange and plate thickness, gasket thickness, rotational alignment of the orifice flanges, and lack of precision in the threads in the orifice flanges and the mating threaded pieces which become part of the impulse lines. When the device is remote mounted, all of these alignment problems become insignificant because there is enough "bend" in the pipe or tubing to compensate for any misalignment.

'"Direct Mount" refers to mounting the differential pressure transducer and/or pressure transducer so that same are supported horizontally off of the process connection without the aid of a separate transducer support system. These systems are of a "close coupled" type (opposite of a remote mount) since the transducer(s) is essentially cantilevered from the process connection. Close coupled direct mounting of the device to orifice taps of an orifice plate device requires that the spacing be generally, precisely 2-1/8 inch (= 53,975 mm) and that all pairs of flange faces are in the same plane.

"Very Close Coupled" refers to a coupling of the root valve pair to the process connection essenciaily without the use of pipe nipples or tubing or the like. In a "very close coupled" system generally only the connectors such as the flange adapters and/or eccentric adapters separate the root valve pair from the process connection. In some cases there may be no separation between the root valve pair and the process connection in that the root valve pair may include an integral weldable end which is joined directly to the process connection. The term very close coupled is intended to distinguish the invention from prior art close coupled, direct mount systems in which the root valve pair is connected to the process connection using a pair of pipe nipples or other components which are stressed to provide sufficient "spring rate'' to correct system misalignments.

"Close Coupled, Supported Mount" (as distinguished from close coupled, direct mount) refers to instrument installations which, due to specific circumstances or plant rules (engineering specifications), require a bracket means or system to support the transducer. This is generally done according to the principle of the invention by using a section of impulse lines located between the transducer and pressure taps which have more spring or spring rate relative to the bracket so that the process taps, and direct mount eccentric adapters, flange adapters, etc. will not be required to support both the weight of the transducer and the bracket (such as would otherwise occur if a mounting bracket were added to the close coupled, direct mount instrument installation).

"Rigid Pipe" refers to using pipe instead of tubing to bring the process pressure(s) to the instrument. Rigid piping has the advantage of "integrity" from greater physical strength and from inherently more secure joints. Generally pipe joints are threaded (not desirable due to possible leaks and stress risers introduced from machining threads in the piping which can cause fractures), but using the principles of the invention welded piping and flanges are used rather than threaded connections to provide an extremely secure construction. From this definition standpoint the eccentric adapters and flange adapters provide a rigid pipe, direct mount connection between the transducer and the process connection.

"Impulse Lines" refer to the conduits or conduit means in whatever form that deliver the process pressure to the transducer.

### DETAILED DESCRIPTION OF THE INVENTION

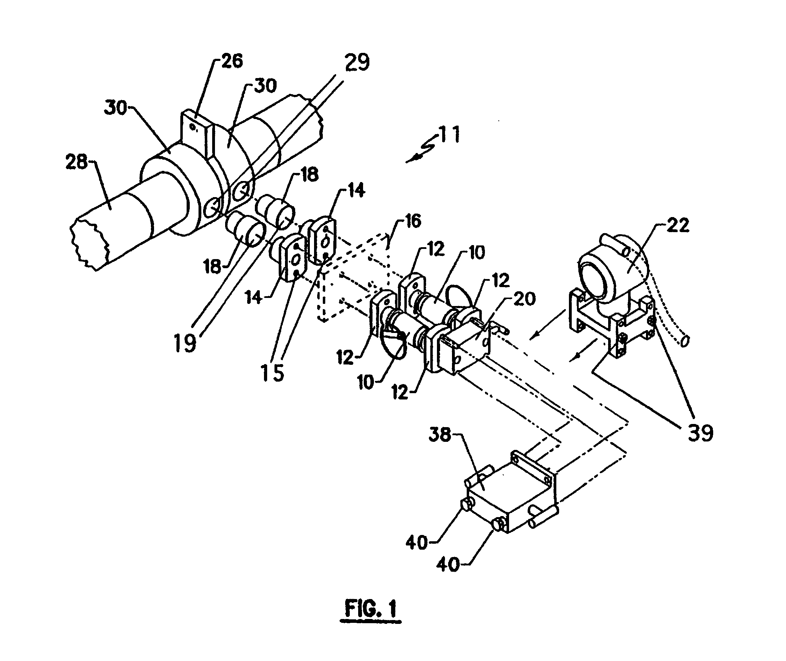

Referring now to Figure 1 of the drawing, there is shown a process instrument installation system 11 for connecting a differential pressure transducer 22 to a process pipe 28 for measuring the flow rate of fluid being transported in the pipe. A differential pressure generating device, preferably an orifice place 26, is installed in the pipe 28 between a pair of orifice flanges 30. A hole in the center of the plate (not shown) reduces the diameter of the pipe in the region of place 26 to generate a differential pressure from which the flow rate can be ascertained in the known manner. The orifice flanges 30 are provided with process pressure taps 29, respectively, which are nominally in the horizontal plane and nominally 2-1/8 inch (=53,975 mm) apart, center line to center line spacing, which are used to bring process pressure to the differential pressure transducer 22.

The invention relates specifically to the instrument installation system 11 which in this embodiment incorporates the above-referenced very close coupled, direct mount design. In this construction a rigid pipe form of connection of the differential pressure transducer 22 is used co directly mount the transducer horizontally off of the process connection or orifice flanges 30. The system 11 provides alignment of necessary components to ensure that the flange faces to which the transducer is attached are in the same plane (as will be described more fully hereinafter). If the spacing is not correct, a pair of eccentric adapters or eccentric adapter means, which will become an integral component of the final installation, must be incorporated into the design to correct this problem.

In regard specifically to the details of construction of the instrument installation system 11, there is provided a pair of root valves or block valves 10 which in the preferred embodiment are designed with integral industry standard instrument flanges 12 on each end. (A specific example of a preferred commercial root valve would be the 6500 series ½ inch (=12,7 mm) ball valves available from TBV, a Division of Victaulic Company of America.) The flanges 12 on the instrument side of the root valves 10 each have a "male" flange face designed to fit together with the standard female flanges 15 used on commercial differential pressure transducers. The flanges 12 on the opposite or process side of root valves 10 are configured to fit together with a pair of flange adapters 14 (tailpieces), respectively. In the embodiments of the invention where industry standard instrument flanges 12 are on both ends of root valves 10, the flange adapters 14 are necessarily provided with industry standard instrument flange faces (either of male or female design). Preferably the flange adapters 14 incorporate an industry standard instrument female flange and the root valves on the process side have industry standard instrument male flanges 12.

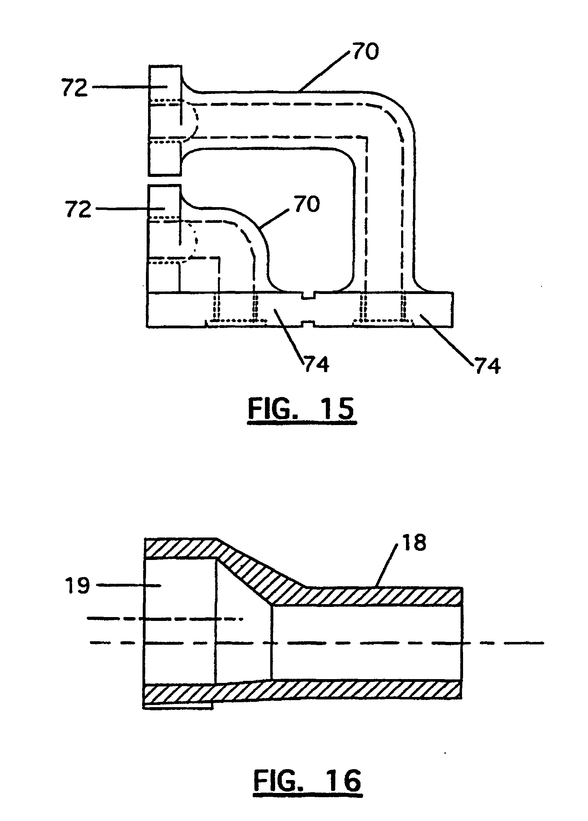

The root valves 10 are fastened to flange adapters 14 using preferably the industry standard 7/16-20 UNF bolts (not shown) which are fastened into a pair of threaded bolt holes 15 associated with each flange adapter 14, respectively. The opposite ends of flange-adapters 14 fit into socket (female) ends 19, respectively, of eccentric adapters 18, respectively, (in the embodiments where eccentric adapters are used). The eccentric adapters 18 are used to compensate for variances in the nominally 2-1/8 inch spacing between taps 29. The eccentric adapters are used to bring the imaginary plane formed by the axis of pressure taps 29 into a more true coplanar alignment with the horizontal plane. Eccentric adapters each have a connection off-set which is shown in the cross-sectional view of Figure 16 . By installing and rotating these adapters. +/-3/8 inch (=9,525mm) corrections can be made to bring the centerline to centerline spacing of the impulse lines back to the industry standard 2-1/8 inch (=53,975 mm) spacing. Following correction of the spacing between the process pressure taps the eccentric adapters are welded into the taps to form a strong leak tight joint.

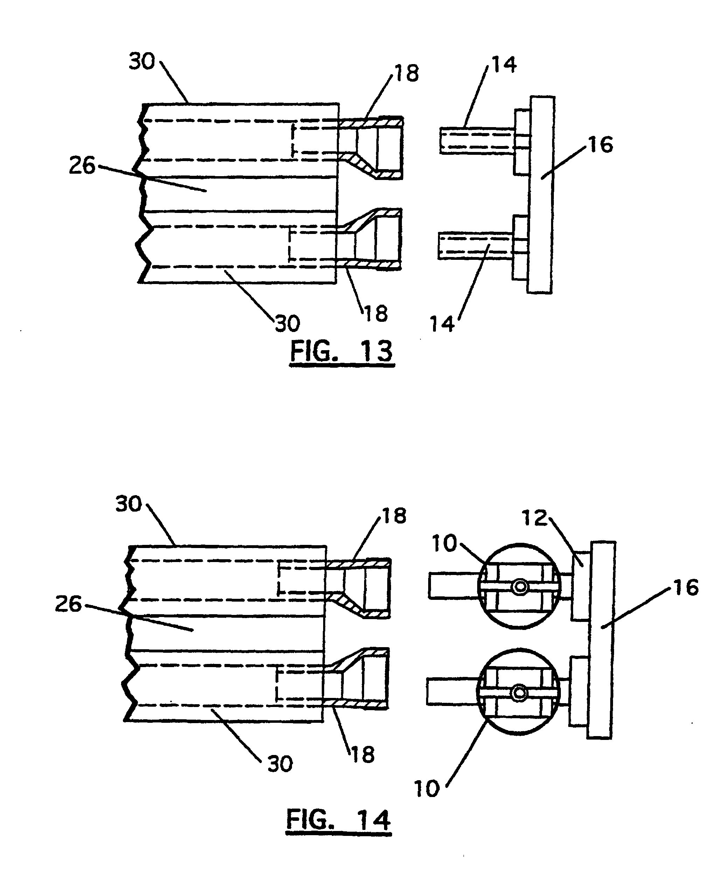

Shown in dotted lines in Figure 1 is a detachable element which represents the alignment means. The alignment means is not normally intended to be a permanent part of the installed system 11, but is detached and reused or discarded after or during installation of the system. The alignment means in the specific preferred embodiment shown is in the form of a flat plate 16 with a planar side for mounting the flange adapters in coplanar alignment (see Figure 13). The place is provided with 4 bolt holes which are used to fasten the plate to flange adapters 14 using the same threaded holes 15 in the flange adapters which, in the final installation, will be reused to couple the root valves to the flange adapters. The lateral spacing between the bolt hole pairs in place 16 is exactly 2-1/8 inch (=53.975 mm) thus providing a center line to center line spacing between the flange adapters of exactly 2-1/8 inch (=53,975mm). This pre-alignment ensures that after the flange adapter pair has been welded to the eccentric adapters 18, the flange faces of the adapters will be coplanar with the vertical plane, and the axial centerlines of the flange adapters 14 will be horizontal, parallel and spaced apart 2-1/8 inch (=53.975mm). These tolerances can be easily attained by the average skilled artisan with sufficient accuracy to easily allow a very close coupled, direct mount of the transducer 12 to the process connection

At the completion of the installation, the alignment place 16 is detached and the root valves 10 are bolted together with flange adapters 14. The differential pressure transducer 12 can then be bolted directly to the root valves to provide a completed and useful assembly for measuring fluid flow rates in pipe 28. In an embodiment with added functionality, an optional bypass manifold 20 (having industry standard instrument flange faces) can be bolted in between the root valves and pressure transducer 22. The body of the bypass manifold 20 provides a valved channel or passage between the two legs of the impulse lines in order to equalize the pressure in high and low pressure ports or inlets of transducer 22. This allows the transducer to be zeroed under line pressure in the known manner rather than under atmospheric pressure.

Another design feature of the installation system 11 shown in Figure 1 is the use of an optional standard instrument manifold valve or blocking valve 38. The standard manifold valve 15 bolted to the back side of the transducer 22 after removing the vent valves 39 (provided with the transducer). The manifold valve is provided with plugs 40 (which do not normally contact the process fluid since the valve passageways are closed by the blocking valves). Thus no threaded connections are presented directly to the process fluid. With the blocking valves closed, and the root valves 10 closed to isolate the process, the plugs 40 can be removed to hook-up flush/drain lines to the manifold valve 38. Once secure, the blocking valves 38 can be safely opened (along with bypass valve 20) for either flushing or flashing the impulse lines without spillage or release of process fluids to the environment.

Figure 14 shows a modified form of the instrument installation system 11 wherein the alignment means 16 is attached to the root valves 10 rather than to the flange adapters. In these embodiments of the invention , the flange adapters 14 are not necessary. Instead the pre-aligned root valve pair are provided with ends on the process side which are adapted to be welded to the process connection. This can be a direct weld or an indirect weld through the eccentric adapters (where the latter may be needed to correct the spacing between the process pressure taps). The alignment means is removed following the direct (rigid) mount of the root valve to the process connection preserving the pre-alignment configuration of the instrument flange ends 12 of the root valve pair. This ensures that the final alignment of the industry standard instrument flange faces in the root valve installation is oriented essentially the same as in their pre-alignment in order to avoid alignment problems with respect to the industry standard instrument flange faces of the differential pressure transducer.

The installation system 11 represents a preferred embodiment of a fundamental unit (building block) used under the principles of the invention to provide a diverse family of pre-designed instrument installation kits though the addition/subtraction of interchangeable components to the basic design or "fundamental unit" illustrated in Figure 1.

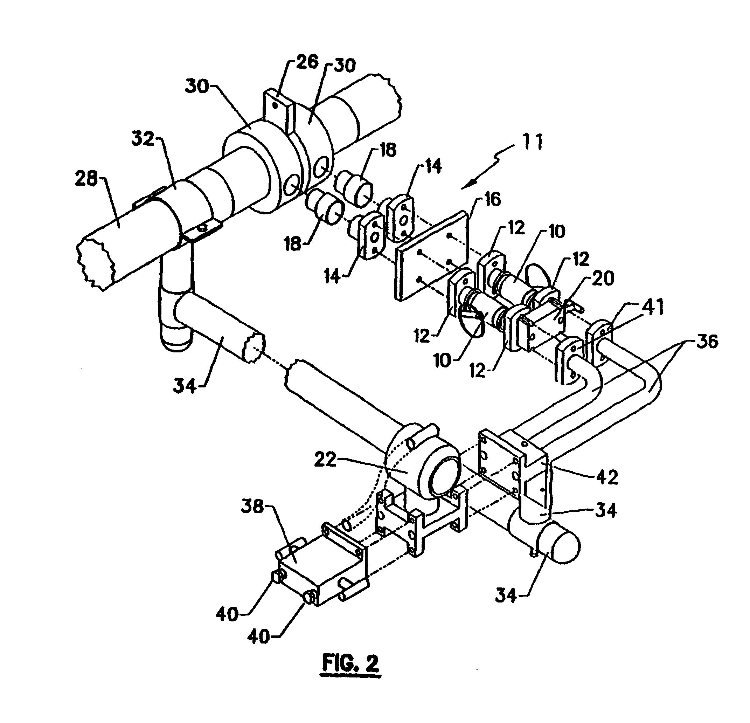

A preferred embodiment of a close coupled, supported mount system is shown in Figure 2 which is an extension of system 11. All that is required to provide a close coupled, supported mount system is to add: (a) an extended impulse line assembly 36 between the optional bypass manifold 20 and the transducer 22; and (b) a pre-designed support system assembly 34 which comprises sections of standard preferably 2 inch (= 50,8 mm) pipe and clamps to support the transducer 22. The impulse line assembly 36 comprises an extended parallel section of impulse line (pipe) provided preferably in a elbow configuration to conserve space. Assembly 36 is provided at one end with integral industry standard instrument flanges with female flange faces which bolt to the instrument side of root valves 10; and at the other end assembly 36 is provided with an integral dual flange adapter 42 with industry standard male flange faces that are bolted to transducer 22 to form a secure flange coupling in the known manner. The dual flange adapter is fastened to the support system 34 to provide a close coupled, supported mount system for transducer 12. Spring rate must be added to the system so that the process taps will not be supporting the weight of the mounting bracket in addition to the weight of the transducer. This may be accomplished by using an assembly 36 with impulse line piping having more spring (flexibility) than the 2 inch (=50,8 mm) pipe support system 34 that is added to support the transducer. Preferably a minimum of 15 inches (= 381 mm) is added to the length of the impulse lines through assembly 36 to provide ample flexibility, meaning enough flexibility such that any vibrational amplitude imposed from the process piping to the transducer is dampened by the 2 inch (=50,8 mm) pipe support and not transferred back through the orifice taps 29. Close coupled, supported mount systems are used frequently to protect the transducer from being exposed to too high or low of a temperature. Process temperatures are citen outside the range of -40 to 200 degrees Fahrenheit (=-40,0 °C to 93,3°C) which is typically the range commercial instruments can generally withstand. The close coupled, supported, mount systems thus reduce the full effect of the process temperature from being applied to the instrument.

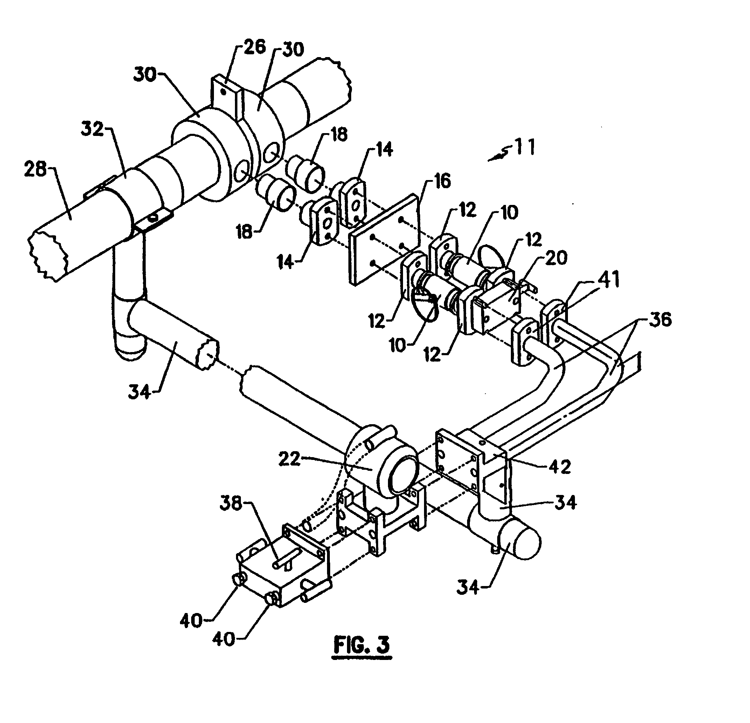

Another close coupled, supported, mount installation system or kit is shown in Figure 3 which includes an added feature designed to protect the transducer from damage or other detrimental effects when used to measure flow rate in applications/conditions where hot, condensable fluids may be or are expected to be encountered. This kit employs the system 11 of the same characteristic design shown in Figures 1 and 2 except that in this case the impulse line assembly 36 has been modified by slightly elevating the end of the assembly which is adjacent to the root valves 10, for example, by about 1 ½ inch (= 38,1 mm) relative to the horizontal plane through the centerlines of the root valves 10. The piping of assembly 36 is elevated to prevent hot fluids from flowing into the transducer 23 and potentially damaging the transducer. That is, liquid condensing in the legs of assembly 36 fills the depressed sections of the impulse lines to form when it cools a liquid barrier that prevents the hot, condensing fluid from the process repeatedly assaulting the transducer to prolong its operational life between replacement or repair.

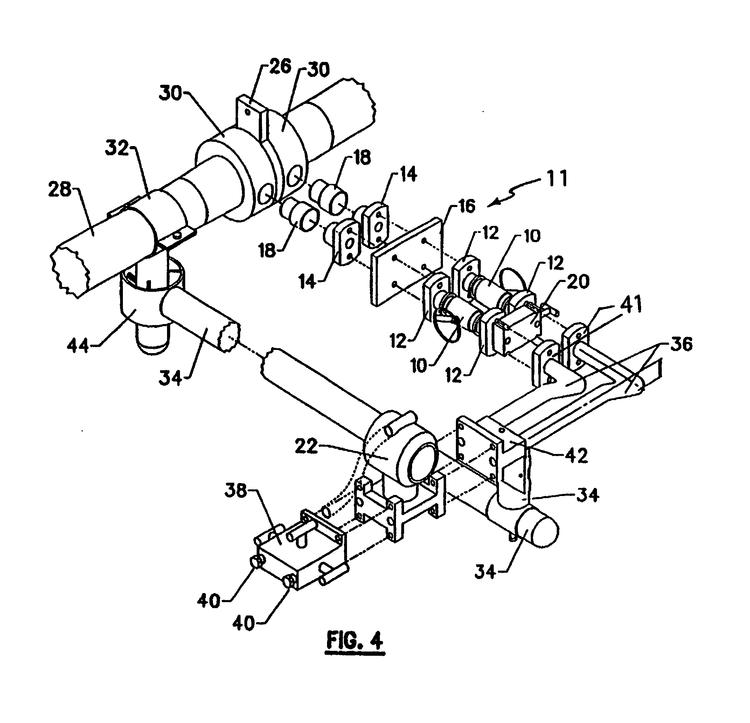

Figure 4 shows an assembly similar to that shown in Figure 3, but with the impulse piping 36 so arranged and designed as to allow connection of the transducer to process piping 28 transporting a cryogenic fluid. In this installation the transducer 22 is isolated from direct contact with flashing vapor in the impulse lines by providing a slightly elevated end in the assembly 36 adjacent to the transducer. Generally about 1 ½ inch (= 38,1 mm) or elevation is sufficient relative to the elevation of the horizontal plane between the centerlines of root valves 10. The elevated section adjacent the transducer fills with trapped vapor such as caused by flashing of the cryogenic fluid in process pipe 28. The crapped vapor rapidly warms to allow the transducer to be kept within a temperature range which its design specifications allow. In conjunction the support bracket associated with the Figure 4 installation is provided with a modified bracket end 44 which thermally isolates the supporting bracket system from the cold effects of pipe 28 in which the cryogenic fluid is being transported. This allows the bracket support system to reach a warmer temperature with the same beneficial effect on the supported transducer.

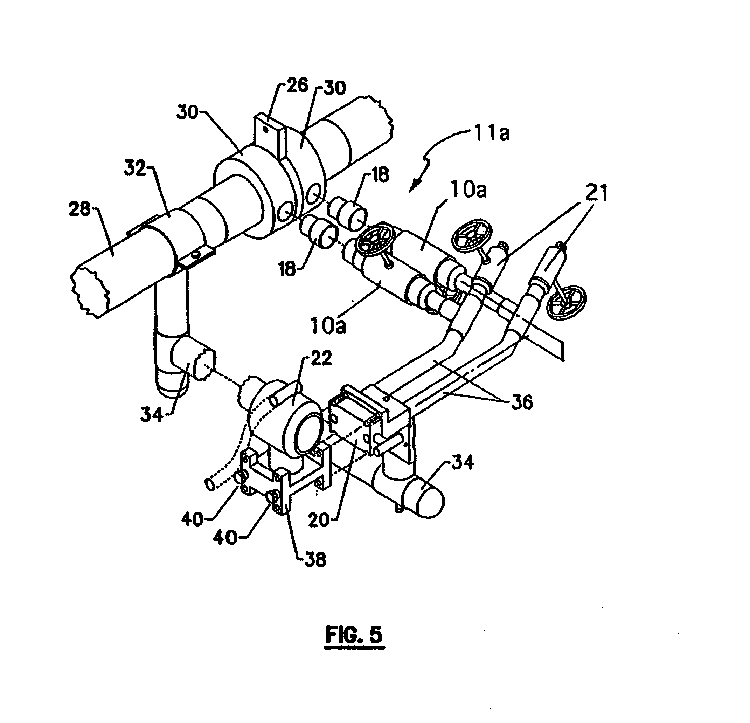

Figure 5 shows an example of an instrument installation system designed to handle steam service. Steam service root valves 10a are substituted and all piping connections, except the direct connection to transducer 22, are welded connections. This design beneficially requires a slight de-elevated section in the legs of the impulse lines adjacent to the transducer 22. This places the transducer and depressed leg sections in a horizontal orientation preferably, for example, about 1 ½ inch (= 38.1 mm) below the elevation of the horizontal platter through the centerlines of the orifice taps. Vent valves are provided which have removable plugs to allow glycol to be added to fill the depressed sections of the impulse legs to protect the transducer 22 from elevated process temperatures. The vent valves provide a seal which separates the vent plugs from the process fluid. Thus the problematic threaded connections associated with the vent plugs are not relied on to prevent leakage of process fluid.

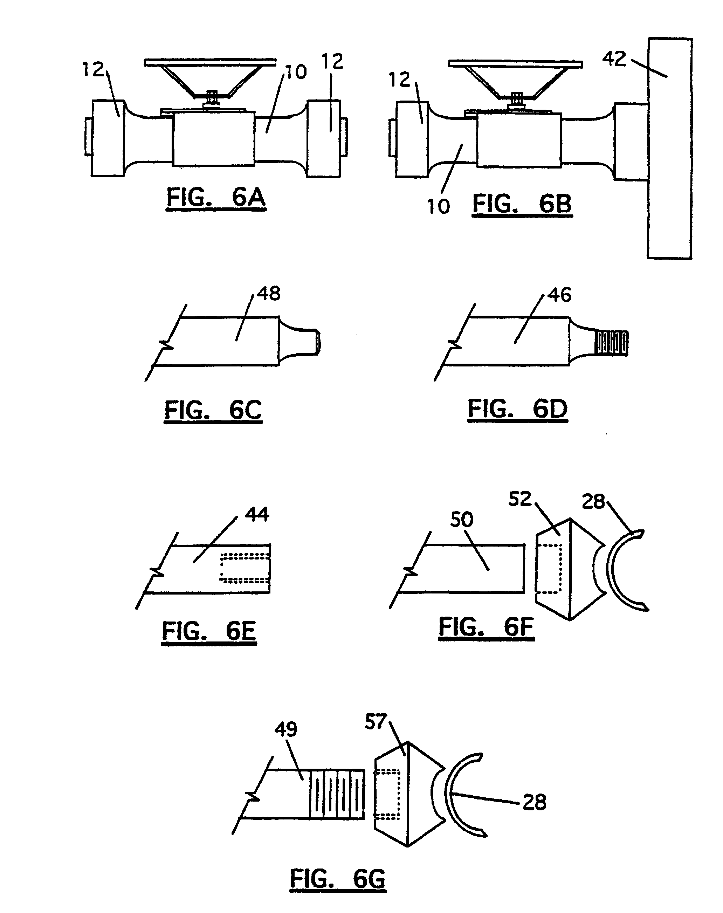

For pressure applications, as opposed to installing a pressure differential transducer, modified root valves can be considered for use which, while maintaining preferably an integral industry standard instrument flange 10 on one end, provide different integral ends on the opposite end of the root valve to allow its use with essentially any type of process connection. Some examples are shown in Figure 6A-6G. Shown are instrument flange root valves 10 which have on the other end: a standard DIN/ANSI flange 42 (see Figure 6B); a plain end 48 suitable for welding connections (see Figure 6C); a male threaded end 46 or a female threaded end 44 (see Figures 6D and 6E); a plain end 50 weldable through an adapter (sock-o-let) 52 to the process pipe 28 (see Figure 6F); and finally a threaded end 49 attachable to pipe 28 through a thread-o-let adapter 57 which contains a threaded socket adapted to receive end 49 and which itself is adapted to be joined to pipe 28 by welding (see Figure 6G).

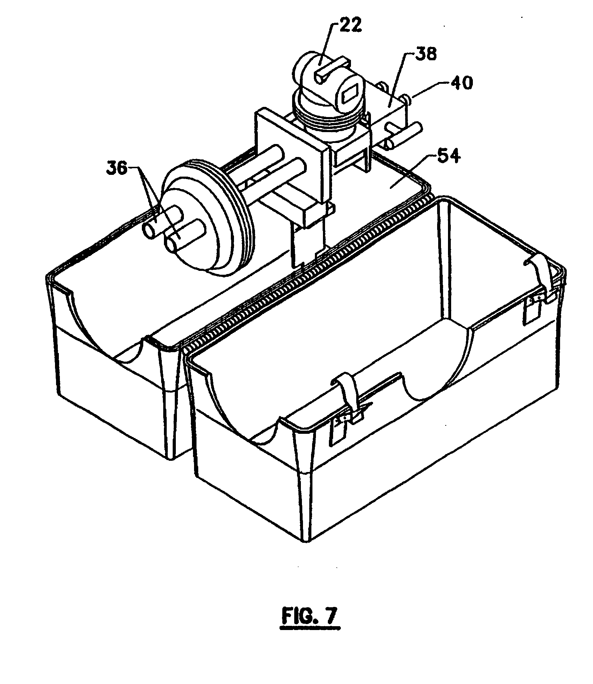

Another feature of the invention involves the use of a "winterizing" kit as shown in Figure 7 which may be employed where cold climatic conditions may be encountered. The winterizing kit is depicted very generally in relation to the transducer, and comprises an enclosure 54, a device that is connectable to the system thereby enclosing the transducer 22, a heater adapter for transferring heat to the transducer 22 and a heater block contacting the adapter for this purpose and preferably utilizing any one of the following heat sources (the adapter and block not being shown in Figure 7 in detail but being of a conventional design underlying the transducer element 22 in Figure 2, for example):
a) electrical - having various electrical ratings, voltages and surface temperatures available;
b) a high BTU fluid such as steam; or
c) a lower BTU fluid such as ethylene glycol.

Figures 8, 9, 10 and 11 reveal a male I-O-LET mating flange 56 having an industry standard male flange face with a custom spigot 55 and custom groove to receive, for example, a ring type gasket or/and o-ring gasket; a female I-O-LET mating flange 58 having an industry standard female flange face with a counterbore 53 to receive the spigot of the male flange face in the known manner; a male I-flange blind 60;and a female I-flange blind 62. The "I" flange tail pieces and the "I"-O-LET fittings have been designed to be used as a socket weld or butt weld fitting with the mating flange to facilitate installation.

Figure 12 shows an assembly for installing a pressure transducer using a single impulse line designed to handle steam pressure service through a single root valve 10 coupled through an integral industry standard instrument flange 12 to an impulse line assembly 36. Assembly 36 through a male instrument flange 64 is connected to a supported pressure transducer 22. In accordance with Figures 6A-6G, root valve 10 on the process side alternatively includes, for example, an integral DIN/ANSI flange 42, a weldable plain end 48, a industry standard instrument flange 12 connectable to a female I-O-LET mating flange, or a threaded end 49 and thread-o-let adapter 57 combination. The various forms of the root valve thus accommodate essentially any form of process connection desired or required by the engineering specifications with respect to connecting pressure transducer instruments to different process vessels and process piping.

Figure 16 shows an elbow shaped flange adapter 70 which can be used as a kit component in any of the systems described with respect to Figures 1-4. The elbow shaped adapter 70 allows close parallel installation of the differential pressure transducer closely besides the process piping 28 where, for example, space conservation is required. The adapter 70 specifically comprises dual, connected industry standard male instrument flanges 72 adapted for connection to the female flange adapters 14; and on the opposite define industry standard female instrument flanges 74 for connection to root valves 10 on the process side of the root valves.

These kits can be pre-assembled off site to include a) two aligned flange adapters 14, or (b) two root valves with optional eccentric adapters, or (c) two aligned root valves with weldable plain ends and optional eccentric adapters. Specific further interchangeable components can be added to define kits having any of the useable combinations of components such as illustrated herein.

## Claims

1. A method of installing a differential pressure transducer (22) of a type having a pair of fixed, spaced apart flanges to a process connection comprising spaced apart pressure taps (29) of a process pipe (28), the method comprising the steps of:
(a) compensating a deviation of the spacing between the process pressure taps (29) from a, predetermined value by welding a pair of eccentric adapter means (18) to the pressure taps (29), each eccentric adapter means (18) comprising a pressure tap side end and a flange adapter side end, the axis of rotation of the pressure tap side end being not coaxial with the axis of rotation of the flange adapter side end, and each eccentric adapter means (18) being rotated around the axis of rotation of the pressure tap side end to achieve said compensation,
(b) welding flange adapters (14) to each of the eccentric adapter means (18) of a type having flange faces on their ends remote from the process connection, and wherein step (b) is carried out using a pair of flange adapters (14) which are held fixed together during the welding operation to maintain proper alignment of the flange faces of the flange adapters (14) during, and following, the step (b) welding operation,
(c) providing a pair of root valves (10), each root valve (10) being the first valve off the process line and acting as a primary isolating valve to temporarily secure isolation of the differential pressure transducer (22) from the process, each root valve (10) being of a type having flange faces (12) on both ends, and connecting the flange faces (12) at one end of the root valves (10) to the flange faces of the respective flange adapters (14), and
(d) connecting the flanges of the input port of the differential pressure transducer (22) directly or via other interposed element(s) to the flange faces (12), of the respective root valves, which are remote from the process connection.

2. The method of claim 1 comprising in step (b) using a detachable alignment means bolted to the flange faces of the flange adapters (14), to hold the flange adapters together during melding.

3. The method of claim 2 wherein the alignment means comprises a alignment plate means (16).

4. The method of claim 1, 2 or 3 wherein said other interposed element(s) in step (d) comprise a bypass manifold (20) having a pair of fixed, spaced apart flange faces on opposite ends, and wherein the flange faces on one end of the bypass manifold (20) are connected to the respective flange faces (12) of the root valves (10), and the flange faces on the opposite end of the bypass manifold (20) are connected directly or via further interposed element(s) to the flanges of the input port of the differential pressure transducer (22).

5. The method of claim 4 comprising using a differential pressure transducer (22) having detachable vent valves (39), and operably connecting a manifold valve (38) to the differential pressure transducer (22) in place of the vent valves (39) to allow flushing or flashing of the impulse lines (36) without spillage or release of the process fluids.

6. A method of installing a differential pressure transducer (22) of a type having a pair of fixed, spaced apart flanges to a process connection comprising spaced apart pressure taps (29) of a process pipe (28), the method comprising the steps of:
(a) compensating a deviation of the spacing between the process pressure taps (29) from a predetermined value by welding a pair of eccentric adapter means (18) to the pressure taps (29), each eccentric adapter means (18) comprising a pressure tap side end and a root valve side end, the axis of rotation of the pressure tap side end being not coaxial with the axis of rotation of the root valve side end, each eccentric adapter means (18) being rotated around the axis of rotation of the pressure top side end to achieve said compensation,
(b) welding root valves (10) to each of the eccentric adapter means (18), each root valve (10) being the first valve off the process line and acting as a primary isolating valve to temporarily secure isolation of the differential pressure transducer (22) from the process, each root valve (10) being of a type having flange faces (12) on its end remote from the process connection, and wherein step (b) is carried out using a pair of root valves (10) which are held fixed together during the welding operation to maintain proper alignment of the flange faces (12) of the root valves (10) during, and following, the welding operation, and
(c) connecting the flanges of the input ports of the differential pressure transducer (22) directly or via other interposed element(s) to the flange faces (12), of the respective root valves (10), which are remote from the process connection.

7. The method of claim 6 comprising in step (b) using a detachable alignment means bolted the root valves (10) to hold the root valves together during alignment.

8. The method of claim 7 wherein the alignment means comprises a alignment plate means (16).

9. The method of claim 6, 7 or 8 wherein said other interposed element(s) comprise in step (c) a bypass manifold (20) having a pair of fixed, spaced apart flange faces on each end, and wherein the flange faces on one end of the bypass manifold (20) are connected to the respective flange faces (12) of the root valves (10), and connecting the flange faces on the opposite end of the bypass manifold (20) are connected directly or via further interposed element(s) to the flanges of the input ports of the differential pressure transducer (22).

10. The method of claim 9 comprising using a differential pressure transducer (22) having detachable vent valves (39), and operably connecting a manifold valve (38) to the differential pressure transducer (22) in place of the vent valves (39) to allow flushing or flashing of the impulse lines (36) without spillage or release of the process fluids.

## Patentansprüche

1. Verfahren zur Installierung eines Differenzdruckaufnehmers (22) eines Typs mit einem Paar von fixierten, beabstandeten Flanschen an eine Prozessverbindung, die beabstandete Druckanschlüsse (29) eines Prozessrohrs (28) aufweist, wobei das Verfahren die Schritte umfasst:
(a) Kompensieren einer Abweichung des Abstands zwischen den Prozessdruckanschlüssen (29) von einem vorbestimmten Wert durch Schweißen eines Paars von exzentrischen Adaptermitteln (18) an die Druckanschlüsse (29), wobei jedes exzentrische Adaptermittel (18) ein druckanschlussseitiges Ende und ein flanschadapterseitiges Ende aufweist, wobei die Drehachse des druckanschlussseitigen Endes nicht koaxial mit der Drehachse des flanschadapterseitigen Endes ist und wobei jedes exzentrische Adaptermittel (18) um die Drehachse des druckanschlussseitigen Endes gedreht wird, um die Kompensation zu erreichen,
(b) Schweißen von Flanschadaptern (14) eines Typs mit Flanschflächen an ihren von der Prozessverbindung entfernten Enden an jedes der exzentrischen Adaptermittel (18) und wobei Schritt (b) durchgeführt wird unter Verwendung eines Paars von Flanschadaptern (14), die während des Schweißvorgangs fest zusammengehalten werden, um eine geeignete Ausrichtung der Flanschflächen der Flanschadapter (14) während und nach dem Schweißvorgang von Schritt (b) beizubehalten,
(c) Bereitstellen eines Paars von Wurzelventilen (10), wobei jedes Wurzelventil (10) das erste Ventil abseits der Prozessleitung ist und als ein primäres isolierendes Ventil wirkt, um temporär eine Isolierung des Differenzdruckaufnehmers (22) von dem Prozess sicherzustellen, wobei jedes Wurzelventil (10) von einem Typ mit Flanschflächen (12) an beiden Enden ist, und Verbinden der Flanschflächen (12) an einem Ende der Wurzelventile (10) mit den Flanschflächen der jeweiligen Flanschadapter (14), und
(d) Verbinden der Flansche des Eingangsanschlusses des Differenzdruckaufnehmers (22) direkt oder über ein anderes dazwischengefügtes Element/ andere dazwischengefügte Elemente mit den Flanschflächen (12) der jeweiligen Wurzelventile, die von der Prozessverbindung entfernt liegen.

2. Verfahren nach Anspruch 1, umfassend, in Schritt (b) ein abnehmbares Ausrichtungsmittel zu verwenden, das mit Bolzen an den Flanschflächen der Flanschadapter (14) angebracht ist, um die Flanschadapter während des Schweißens zusammenzuhalten.

3. Verfahren nach Anspruch 2, wobei das Ausrichtungsmittel ein Ausrichtungsplattenmittel (16) umfasst.

4. Verfahren nach Anspruch 1,2 oder 3, wobei das andere dazwischengefügte Element/ die anderen dazwischengefügten Elemente in Schritt (d) einen Umgehungsverteiler (20) umfasst/umfassen, der ein Paar von fixierten, beabstandeten Flanschflächen an gegenüber liegenden Enden aufweist, und wobei die Flanschflächen an einem Ende des Umgehungsverteilers (20) mit den jeweiligen Flanschflächen (12) der Wurzelventile (10) verbunden sind und wobei die Flanschflächen an dem gegenüber liegenden Ende des Umgehungsverteilers (20) direkt oder über ein weiteres dazwischengefügtes Element/ weitere dazwischengefügte Elemente mit den Flanschen des Eingangsanschlusses des Differenzdruckaufnehmers (22) verbunden sind.

5. Verfahren nach Anspruch 4, umfassend die Verwendung eines Differenzdruckaufnehmers (22) mit abnehmbaren Lüftungsventilen (39) und zum Betrieb Verbinden eines Verteilerventils (38) mit dem Differenzdruckaufnehmer (22) anstelle der Lüftungsventile (39), um ein Spülen oder Sprühen der Druckleitungen (36) zu ermöglichen, ohne Auslaufen oder Freigeben der Prozessfluide.

6. Verfahren zur Installierung eines Differenzdruckaufnehmers (22) eines Typs mit einem Paar von fixierten, beabstandeten Flanschen an eine Prozessverbindung, die beabstandete Druckanschlüsse (29) eines Prozessrohrs (28) aufweist, wobei das Verfahren die Schritte umfasst:
(a) Kompensieren einer Abweichung des Abstands zwischen den Prozessdruckanschlüssen (29) von einem vorbestimmten Wert durch Schweißen eines Paars von exzentrischen Adaptermitteln (18) an die Druckanschlüsse (29), wobei jedes exzentrische Adaptermittel (18) ein druckanschlussseitiges Ende und ein wurzelventilseitiges Ende aufweist, wobei die Drehachse des druckanschlussseitigen Endes nicht koaxial mit der Drehachse des wurzelventilseitigen Endes ist, wobei jedes exzentrische Adaptermittel (18) um die Drehachse des druckanschlussseitigen Endes gedreht wird, um die Kompensation zu erreichen,
(b) Schweißen von Wurzelventilen (10) an jedes der exzentrischen Adaptermittel (18), wobei jedes Wurzelventil (10) das erste Ventil abseits der Prozessleitung ist und als ein primäres isolierendes Ventil wirkt, um temporär eine Isolierung des Differenzdruckaufnehmers (22) von dem Prozess sicherzustellen, wobei jedes Wurzelventil (10) von einem Typ mit Flanschflächen (12) an seinem von der Prozessverbindung entfernten Ende ist, und wobei Schritt (b) durchgeführt wird unter Verwendung eines Paars von Wurzelventilen (10), die während des Schweißvorgangs fest zusammengehalten werden, um eine geeignete Ausrichtung der Flanschflächen (12) der Wurzelventile (10) während und nach dem Schweißvorgang beizubehalten, und
(c) Verbinden der Flansche der Eingangsanschlüsse des Differenzdruckaufnehmers (22) direkt oder über ein anderes dazwischengefügtes Element/ andere dazwischengefügte Elemente mit den Flanschflächen (12) der jeweiligen Wurzelventile (10), die von der Prozessverbindung entfernt liegen.

7. Verfahren nach Anspruch 6, umfassend, in Schritt (b) ein abnehmbares Ausrichtungsmittel zu verwenden, das mit Bolzen an den Wurzelventilen (10) angebracht ist, um die Wurzelventile während der Ausrichtung zusammenzuhalten.

8. Verfahren nach Anspruch 7, wobei das Ausrichtungsmittel ein Ausrichtungsplattenmittel (16) umfasst.

9. Verfahren nach Anspruch 6, 7 oder 8, wobei das andere dazwischengefügte Element/ die anderen dazwischengefügten Elemente in Schritt (c) einen Umgehungsverteiler (20) umfasst/umfassen, der ein Paar von fixierten, beabstandeten Flanschflächen an jedem Ende aufweist, und wobei die Flanschflächen an einem Ende des Umgehungsverteilers (20) mit den jeweiligen Flanschflächen (12) der Wurzelventile (10) verbunden sind und wobei die Flanschflächen an dem gegenüber liegenden Ende des Umgehungsverteilers (20) direkt oder über ein weiteres dazwischengefügtes Element/ weitere dazwischengefügte Elemente mit den Flanschen der Eingangsanschlüsse des Differenzdruckaufnehmers (22) verbunden sind.

10. Verfahren nach Anspruch 9, umfassend die Verwendung eines Differenzdruckaufnehmers (22) mit abnehmbaren Lüftungsventilen (39) und zum Betrieb Verbinden eines Verteilerventils (38) mit dem Differenzdruckaufnehmer (22) anstelle der Lüftungsventile (39), um ein Spülen oder Sprühen der Druckleitungen (36) zu ermöglichen, ohne Auslaufen oder Freigeben der Prozessfluide.

## Revendications

1. Procédé pour l'installation d'un transducteur de pression différentiel (22), d'un type comprenant une paires de brides fixes et espacées l'une à l'écart de l'autre, sur un raccordement de procédé comprenant des prises de pression (29) espacées d'une conduite de procédé (28), le procédé comprenant les étapes consistant à :
(a) compenser une déviation de l'espacement entre les prises de pression (29) de procédé à partir d'une valeur prédéterminée en soudant une paire de moyens d'adaptation excentriques (18) aux prises de pression (29), chaque moyen d'adaptation excentrique (18) comprenant une extrémité côté prise de pression et une extrémité côté adaptateur à bride, l'axe de rotation de l'extrémité côté prise de pression n'étant pas coaxial avec l'axe de rotation de l'extrémité côté adaptateur à bride, et chaque moyen d'adaptation excentrique (18) entrant en rotation autour de l'axe de rotation de l'extrémité côté prise de pression pour obtenir ladite compensation ;
(b) souder des adaptateurs à bride (14) sur chacun des moyens d'adaptation excentriques (18), d'un type comportant des faces de bride à leurs extrémités distantes du raccordement de procédé, l'étape (b) étant exécutée au moyen d'une paire d'adaptateurs à bride (14) qui sont maintenus fixés solidairement entre eux pendant l'opération de soudage pour maintenir le bon alignement des faces de bride des adaptateurs à bride (14), pendant et après l'opération de soudage de l'étape (b) ;
(c) mettre en place une paire de vannes de sécurité (10), chaque vanne de sécurité (10) étant la première vanne hors de la ligne de procédé et agissant comme vanne d'isolation primaire pour assurer temporairement l'isolation du transducteur de pression différentiel (22) du procédé, chaque vanne de sécurité (10) étant d'un type comportant des faces de bride (12) aux deux extrémités, et raccordant les faces de bride (12) à une extrémité des vannes de sécurité (10) aux faces de bride des adaptateurs à bride (14) respectifs ; et,
(d) raccorder les brides de l'orifice d'entrée du transducteur de pression différentiel (22), directement ou via un autre ou d'autres éléments interposés, aux faces de bride (12) des vannes de sécurité respectives distantes du raccordement de procédé.

2. Procédé selon la revendication 1 comprenant à l'étape (b) l'utilisation d'un moyen d'alignement détachable, boulonné aux faces de bride des adaptateurs à bride (14), pour solidariser les adaptateurs à bride pendant le soudage.

3. Procédé selon la revendication 2 dans lequel le moyen d'alignement comprend un moyen de plaque d'alignement (16).

4. Procédé selon l'une des revendications 1, 2 et 3, dans lequel ledit ou lesdits autres éléments interposés, à l'étape (d), comprennent un collecteur de dérivation (20) muni d'une paire de faces de bride fixes et espacées aux extrémités opposées, les faces de bride à une extrémité du collecteur de dérivation (20) étant raccordées aux faces de bride (12) respectives des vannes de sécurité (10), et les faces de bride à l'extrémité opposée du collecteur de dérivation (20) étant raccordées directement ou via un autre ou d'autres éléments interposés supplémentaires aux brides de l'orifice d'entrée du transducteur de pression différentiel (22).

5. Procédé selon la revendication 4 utilisant un transducteur de pression différentiel (22) muni de vannes d'aération (39) détachables, et raccordant opérationnellement une vanne collectrice (38) au transducteur de pression différentiel (22) à la place des vannes d'aération (39) pour permettre le rinçage ou le séchage des conduits d'impulsion (36) sans déversement ni vidange des liquides de procédé.

6. Procédé pour l'installation d'un transducteur de pression différentiel (22), d'un type comprenant une paires de brides fixes et espacées l'une de l'autre, sur un raccordement de procédé comprenant des prises de pression (29) espacées d'une conduite de procédé (28), le procédé comprenant les étapes consistant à :
(a) compenser une déviation de l'espacement entre les prises de pression (29) de procédé à partir d'une valeur prédéterminée en soudant une paire de moyens d'adaptation excentriques (18) aux prises de pression (29), chaque moyen d'adaptation excentrique (18) comprenant une extrémité côté prise de pression et une extrémité côté vanne de sécurité, l'axe de rotation de l'extrémité côté prise de pression n'étant pas coaxial avec l'axe de rotation de l'extrémité côté vanne de sécurité, chaque moyen d'adaptation excentrique (18) entrant en rotation autour de l'axe de rotation de l'extrémité côté prise de pression pour obtenir ladite compensation ;
(b) souder des vannes de sécurité (10) sur chacun des moyens d'adaptation excentriques (18), chaque vanne de sécurité (10) étant la première vanne hors de la ligne de procédé et agissant comme vanne d'isolation primaire pour assurer temporairement l'isolation du transducteur de pression différentiel (22) du procédé, chaque vanne de sécurité (10) étant d'un type comportant des faces de bride (12) sur son extrémité distante du raccordement de procédé, l'étape (b) étant exécutée au moyen d'une paire de vannes de sécurité (10) qui sont maintenues fixes solidairement pendant l'opération de soudage pour maintenir le bon alignement des faces de bride (12) des vannes de sécurité (10) pendant et après l'opération de soudage ; et,
(c) raccorder les brides des orifices d'entrée du transducteur de pression différentiel (22), directement ou via un autre ou d'autres éléments interposés, aux faces de bride (12) des vannes de sécurité (10) respectives distantes du raccordement de procédé.

7. Procédé selon la revendication 6 comprenant à l'étape (b) l'utilisation d'un moyen d'alignement détachable, boulonné aux vannes de sécurité (10), pour solidariser les vannes de sécurité pendant l'alignement.

8. Procédé selon la revendication 7 dans lequel le moyen d'alignement comprend un moyen de plaque d'alignement (16).

9. Procédé selon l'une des revendications 6, 7 et 8 dans lequel ledit ou lesdits autres éléments interposés comprennent, à l'étape (c), un collecteur de dérivation (20) muni d'une paire de faces de bride fixes et espacées l'une de l'autre à chaque extrémité, les faces de bride à une extrémité du collecteur de dérivation (20) étant raccordées aux faces de bride (12) respectives des vannes de sécurité (10), et les faces de bride à l'extrémité opposée du collecteur de dérivation (20) étant raccordées directement ou via un autre ou d'autres éléments interposés supplémentaires aux brides des orifices d'entrée du transducteur de pression différentiel (22).

10. Procédé selon la revendication 9 utilisant un transducteur de pression différentiel (22) muni de vannes d'aération (39) détachables, et raccordant opérationnellement une vanne collectrice (38) au transducteur de pression différentiel (22) à la place des vannes d'aération (39) pour permettre le rinçage ou le séchage des conduits d'impulsion (36) sans déversement ni vidanqe des liquides de procédé.
